# EUROPEAN PATENT APPLICATION

(11) **EP 1 376 347 A2**
(43) Date of publication of application: **02.01.2004**
(21) Application number: 03253905.8
(22) Date of filing: 20.06.2003
(51) Int. Cl.: G06F 9/445

(54) **Software installing method for setting up a printing environment on a computer on an individual computer basis**

(30) Priority: 28.06.2002 JP 2002191351; 05.06.2003 JP 2003160941
(71) Applicant: Ricoh Company Ltd., Tokyo 143-8555 (JP)
(72) Inventor: Kobayashi, Hiroki, Kawasaki-shi, Kanagawa (JP)
(74) Representative: Leeming, John Gerard

(57) **Abstract**

A software-installing method can easily install a device driver and set a printing environment in a computer (1) on an individual computer basis. A template (11) of a scenario (16), which describes procedures for installing the software, is produced. Data corresponding to parameters contained in the template is stored in an installation database (15). A scenario specific to each computer is produced by incorporating the data acquired from the database into the parameters of the template (11).

## Description

The present invention relates to a print system using a network and, more particularly, to an installing method of software that is required to be installed to a host apparatus so as to allow a user to use a printing apparatus through the host apparatus, and a program for causing a computer to execute such a method.

In recent years, it has become possible to share a host apparatus, a printing device, a memory device, a scanner,etc. by a plurality of users (client terminals) by connecting these equipments through a network such as a local area network (LAN). In order to achieve printing in such a network environment, a host apparatus needs a printer driver for controlling a printing device, which operates with an operating system (OS) to create print data. The host apparatus also needs data transfer software for transferring the print data from the host apparatus to the printing device through the network.

Usually, in many cases, such software (the above-mentioned printer driver and data transfer software) is distributed in the form of a CD-ROM or a flexible disk (FD), which is enclosed in a package of the printing device. Japanese Laid-Open Patent Application No. 11-134135 discloses an installation system, which can install software (printer driver) necessary for printing by downloading the software from a printing device connected through a network at the time of executing the printing.

In a case in which many printing devices are connected to a network and a number of terminals such as a host apparatus connected to the network is also large, it is necessary to perform a setting operation for the printing devices used by each of the terminals on an individual terminal basis. That is, it is necessary to install a printer driver for the printing device to be used on an individual terminal basis. Moreover, the printing environment used by the terminals may differ among the terminals, and it is necessary to set the software to set up the printing environment on an individual terminal basis.

Conventionally, a printer driver and software for setting a printing environment are prepared for each of a plurality of terminals which use the same printing device, and the printer driver and the software are stored in a recording medium such as a CD-ROM together with install software and the recording medium is distributed to each group of terminals using the same printing device. Such software is referred to as an installer. In this case, since a printer driver varies among the printing devices, the number of the installers (that is, printer drivers) must be equal to the number of printing devices.

Therefore, if the number of the printing devices connected to a network is increased due to an increase in the scale of the network, the number of CD-ROMs to be prepared is increased similar to the number of the printing devices. For example, if 100 sets of printing devices are connected to a network, 100 kinds of CD-ROMs must be produced and distributed. Although an installer can be distributed not in the form of a CD-ROM but from a server or the like through the network, the number of the installers to be prepared does not change and 100 kinds of installers must be produced when 100 sets of printing devices are connected to the network.

Furthermore, there may be a case where different printing environments are set in even the terminals using the same printing device. For example, the setting for printing environment such as whether to set color printing or whether to set double-side printing is different for each terminal. Thus, in order to set different printing environment in the terminal on an individual terminal basis, the number of installers to be produced must be equal to the number of terminals connected to the network. For example, when 100 printing devices are connected and an average of ten sets of terminals are connected to each of the printing devices, the number of terminals is 1000 and 1000 kinds of installers must be produced.

Thus, when the scale of a network is large, there is a problem in that the work for producing installers takes a time, which is a large burden for a network administrator.

It is a general object of the present invention to provide an improved and useful software-installing method in which the above-mentioned problems are eliminated.

A more specific object of the present invention it to provide a software-installing method for easily installing a device driver and setting a printing environment in a terminal on an individual terminal basis, and a program which causes a computer to executed such a software-installing method.

In order to achieve the above-mentioned objects, there is provided according to one aspect of the present invention a software-installing method for installing software in a computer so as to use one of a plurality of printing devices connected the computer through a network, the method comprising the steps of: acquiring a template of a scenario which describes procedures for installing the software; acquiring data corresponding to parameters contained in the template with respect to said computer by searching an installation database; and producing the scenario which is specific to said computer by incorporating the acquired data into the parameters of said template.

According to the above-mentioned invention, the template of the scenario is to describe items common to the plurality of computers, and the data specific to each computer is acquired from the database at the time when the software is installed. That is, the network administrator produces and provides only the template and the database, and the computers automatically produce the scenario specific to each of the computers on an individual computer basis. Therefore, the network administrator can save time and effort to produce the scenario specific to each computer, thereby reducing expenses for maintaining and managing the network.

The software-installing method according to the present invention may further comprise a step of inputting the produced scenario to an installation program. Additionally, the software-installing method may further comprise a step of acquiring the data corresponding to the parameters from the installation database located outside said computer. Further, the software-installing method may further comprise a step of acquiring data regarding print setting information as data for said parameters from said installation database.

Additionally, there is provided according to another aspect of the present invention a software-installing method for installing software in a computer so as to use one of a plurality of printing devices connected the computer through a network, the method comprising the steps of: producing a template of a scenario which describes procedures for installing the software; and producing the scenario, which is specific to said computer, based on the produced template.

The above-mentioned software-installing method can be described by a program so that a computer can perform the software-installing method. The program may be stored in a processor readable medium such as a CD-ROM so that a computer acquires the program by reading the medium.

Another objects, features and advantages of the present invention will become more apparent from the following description of exemplary embodiments when read conjunction with the accompanying drawings, in which:
FIG. 1 is an illustration of a structure of a network system to which a software-installing method according to the present invention is applied;
FIG. 2 is a flowchart of a process procedure for installing software;
FIG. 3 is an illustration for explaining a process of producing a scenario from a template;
FIG. 4 is an illustration showing an example of the template;
FIG. 5 is illustration of an example of the scenario produced so as to install software into a host apparatus in the network shown in FIG. 1;
FIG. 6 is illustration of another example of the scenario produced so as to install software into a host apparatus in the network shown in FIG. 1;
FIG. 7 is a flowchart of a process for installing a printer driver and setting information into a host apparatus;
FIG. 8 is a flowchart of a process of acquiring print setting information based on the host name of the host apparatus;
FIG. 9 is an illustration showing the contents of the database, which describes a host name as a key parameter and print setting information related to the host name; and
FIG. 10 is an illustration showing the contents of the database, which describes a log-in name as a key parameter and print setting information related to the log-in name.

A description will now be given, with reference to the drawings, a software-installing method and a program for causing a computer to perform such a software-installing method according to an embodiment of the present invention.

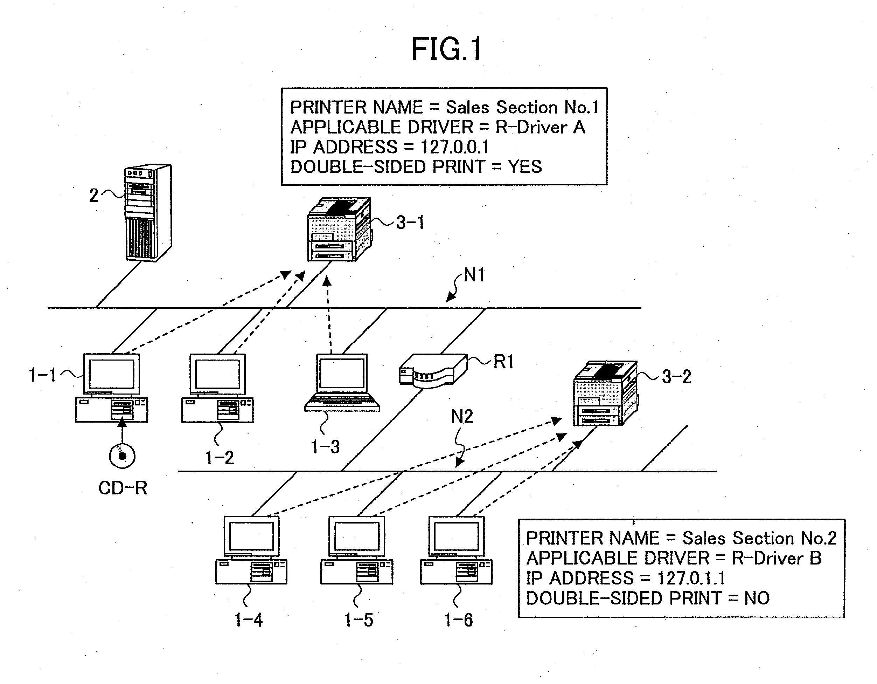

FIG. 1 is an illustration of a structure of a network system to which a software-installing method according to the present invention is applied.

The network shown in FIG. 1 is a large-scaled network, which is formed by connecting a network N1 and a network N2 to each other through a router R1. Host apparatuses 1-1, 1-2 and 1-3, a server apparatus 2 and a printing device 3-1 are connected to the network N1. Host apparatuses 1-4, 1-5 and 1-6 and a printing device 3-2 are connected to the network N2. The host apparatuses 1-1 through 1-6 are various kinds of computers such as a personal computer and a notebook size computer. The printing devices 3-1 and 3-2 are printers for performing printing operations based on the outputs of the computers.

A printing operation requested by the host apparatus 1-1 through 1-6 is performed by the printing devices 3-1 and 3-2 in accordance with the following procedure. It should be noted that, in the following description, the host apparatuses 1-1 through 1-6 may be referred to as a host apparatus 1 as a generic designation, and also the printing devices 3-1 and 3-1 may be referred to as a printing device 3 as a generic designation.

When a print instruction is issued by an application program, which runs on the host apparatus 1, print data is produced by a device driver which is most appropriate for the printing device 3, which is to perform the printing. After the print data is produced, the print data is transferred by data transfer software to the printing device 3 having the designated address. Thereby, a printing result is output from the printing device 3.

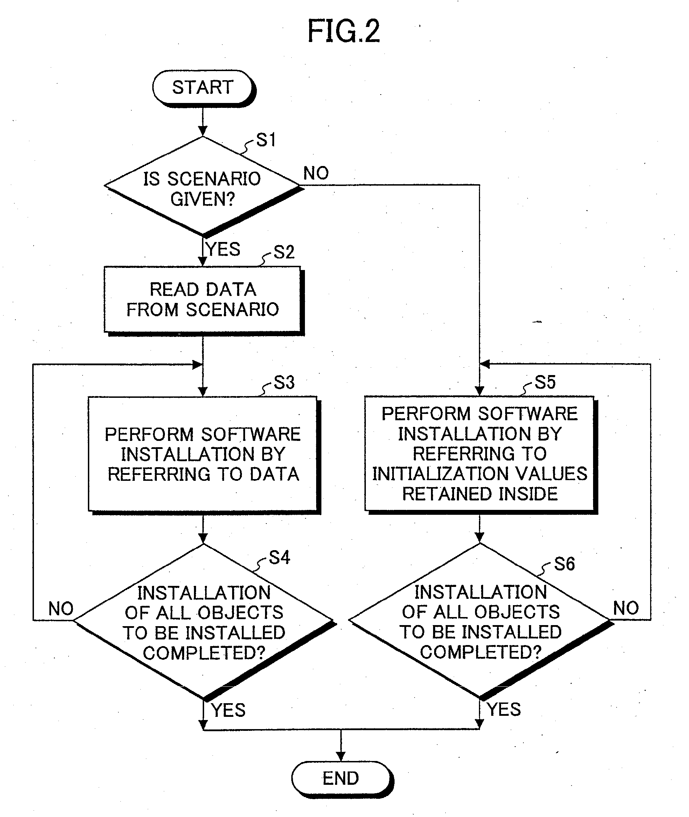

A description will now be given, with reference to FIG. 2, of a process for installing to the host apparatus 1 the software (a printer driver and data-transfer software) necessary for using the printing device. FIG. 2 is a flowchart of a process procedure for installing software.

A recording medium such as, for example, a CD-ROM, in which an installation program (installer) is described, is supplied to the host apparatus 1 (refer to the host apparatus 1-1 in FIG. 1). A processor of the host apparatus 1 performs the following software installation processes by executing the installation program. Additionally, a scenario (installation information description file), which is a file describing the installation information for executing the installer, is also supplied to the host apparatus 1 together with the installer.

When the processor of the host apparatus 1 starts to execute the installation program, it is determined whether or not a scenario (installation information description file), which was produced previously by a management person or the like, has been supplied (step S1). If the scenario has been supplied (step S1: Yes), the installation program reads the contents of the scenario (step S2). As to how to provide the scenario, there is considered a method of designating the scenario as a starting argument of the installation program.

A device driver name and names of applications (programs), which are to be installed into the host apparatus 1, and a setup of each application, etc. are described in the scenario. For example, the scenario describes that a device driver of a specific printer 3 be installed and "double-sided printing" be performed as the setup for the device driver. Moreover, the scenario describes that a port monitor used with the operating system (for example, Windows(R)) of the host apparatus 1 be installed and an output IP address be designated as a port setup.

After reading the above-mentioned scenario, the installation program executes installation and setup of software (programs such as a device driver and applications) by referring to the data described in the scenario (step S3).

Thereafter, each time the installation of a set of software is completed, it is determined whether or not all sets of software has been completed (step S4). If other sets of software needs to be installed (step S4:No), the routine proceeds to an installation process of the set of software described at the next position (return to step S3). After completion of all sets of software (step S4:Yes), the software installation process is ended.

If the scenario, which is a file describing the installation information, is not provided, the installation program itself can also perform the installation of software. Generally, in many cases, an original installation program is prepared for each application. In such as case, an interface may be provided between the installation program and each application so as to link the operations so that an installation command can be issued for the installation program provided to each application.

That is, when it is determined, in step S1, that the scenario (installation information description file) is not given (step S1:No), installation and setup of software is performed while the installation program itself refers to initial values previously provided inside the installation program (step S5). Thereafter, each time the installation of a set of software is completed, it is determined whether or not all sets of software has been completed (step S6). If other sets of software needs to be installed (step S6:No), the routine proceeds to an installation process of the set of software described at the next position (return to step S5). After completion of all sets of software (step S6:Yes), the software installation process is ended.

As mentioned above, if a scenario is given, the host apparatus 1 reads the scenario according to the installation program, and installs software required for performing a printing operation by a printing device. Although the information regarding the printer driver which should be installed to the host apparatus 1 and printing environment setting information are described in the scenario, in order to install a different printer driver to the host apparatus 1 or to set up a different printing environment on an individual apparatus basis, it is necessary to change the contents of the scenario.

Thus, in the present embodiment, a different scenario is installed to each host apparatus 1 by producing the scenario, which is referred to by the installation program, at the time of installing software. In order to do this, a template for installation, which is a base of a scenario, is produced, and setting information, which varies with each host apparatus 1, is assumed to be parameters. Thus, a scenario specific to each host apparatus 1 is produced by reading the parameters in the template from a database and setting the parameters in the template.

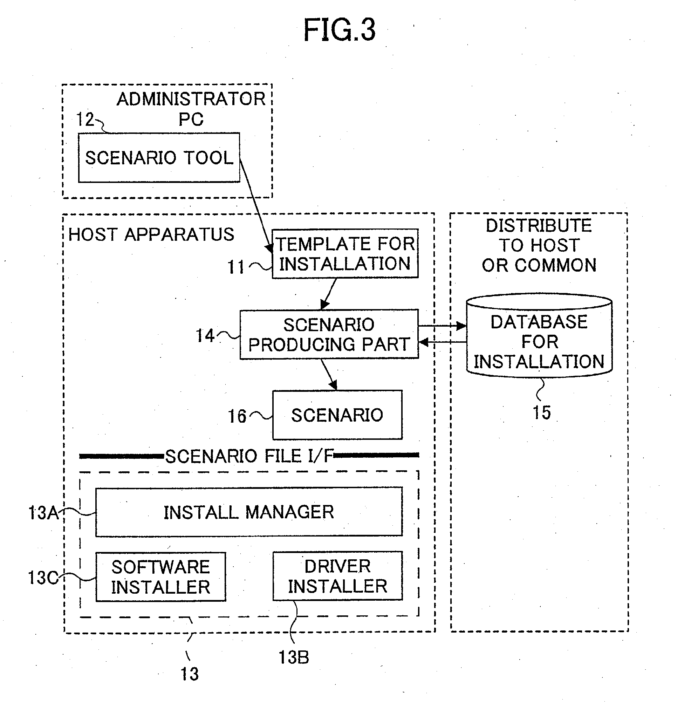

FIG. 3 is an illustration for explaining the process of producing a scenario from a template. A network administrator (a person who manages a network) creates beforehand a template 11 for installation, which describes basic items of a scenario, using a template creation tool (scenario tool) 12. Although the network administrator creates the scenario itself conventionally using the scenario tool, the network administrator creates the template 11 used as a basis of a scenario in the present embodiment.

The template 11 created by the administrator is supplied to the host apparatus 1 together with an installation program (installer 13). The installer 13 contains an installation manager 13A, a driver installer 13B for installing a printer driver, and software installer 13C for installing software which executes a printing environment setup.

The template 11 supplied to the host apparatus 1 with the installer 13 is supplied to a scenario producing part 14. The scenario producing part 14 produces a scenario 16 based on the template 11 by referring to a database 15 for installation.

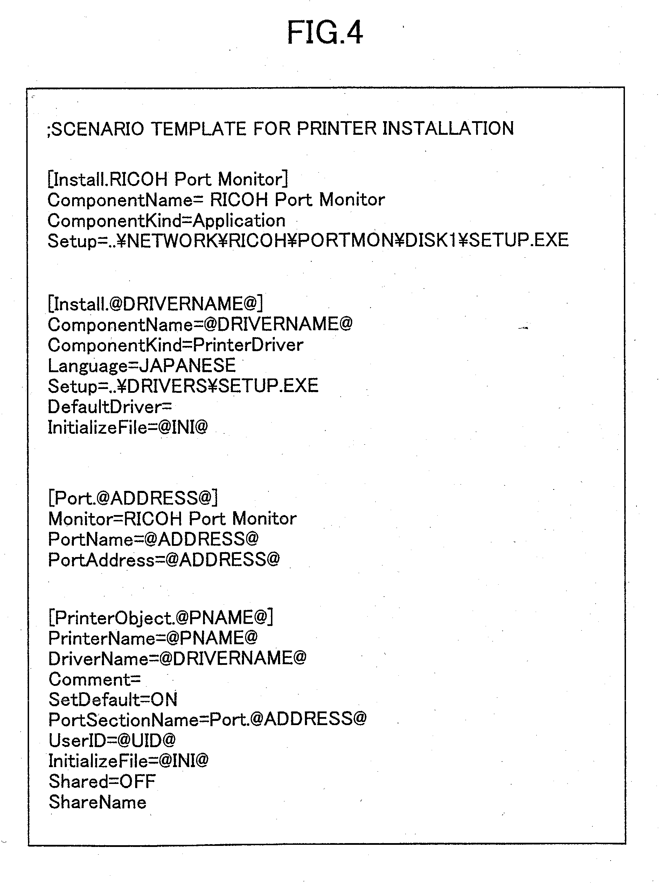

FIG. 4 is an illustration showing an example of the template 11. The template 11 shown in FIG. 4 describes that installation of software be performed in the following flow.
1) Install RICOH Port Monitor.
2) Install a printer driver.
3) Create a printer port, which outputs data to the IP address of a printing device.
4) Create a printer object by relating the printer driver installed in the above item 2) with the printer port created in the above item 3).

The setting items common to the host apparatus 1 are described in the template 11. Additionally, in the template 11, the setting items which should be set to values specific to each host apparatus 1 are described as parameters. In FIG. 4, parts sandwiched by signs "@" correspond to the parameters. In the example shown in FIG. 4, the name of the printer driver (@DRIVERNAME@) to be installed, the initialization file (@INI@) to be used, the network address (@ADDRESS@) of the printing device, the name (@PNAME@) of the printing device, and a user identification number (@UID@) are set as parameters.

The scenario producing part 14 is a tool for producing a scenario based on setting items specific to a user or a host apparatus, and operates on a host apparatus (client PC). The scenario producing part 14 searches the database 15 using the name of the host apparatus 1 which is currently installing the software or a log-in name so as to acquire print setting information specific to the host computer 1 concerned. Thus, the scenario 16 specific to the host apparatus 1 concerned is produced by incorporating the acquired print setting information into the parameters of the template 11.

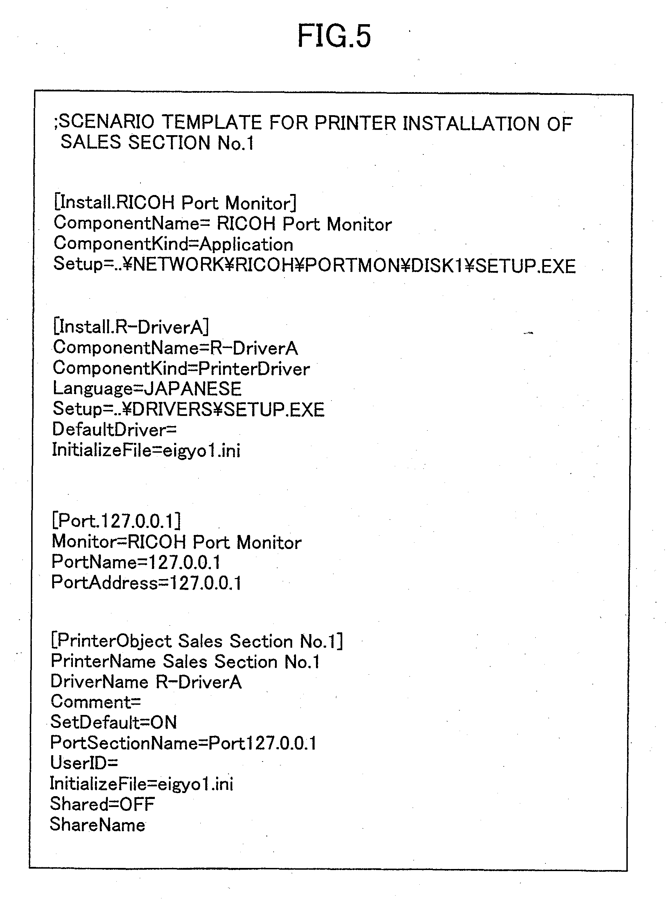

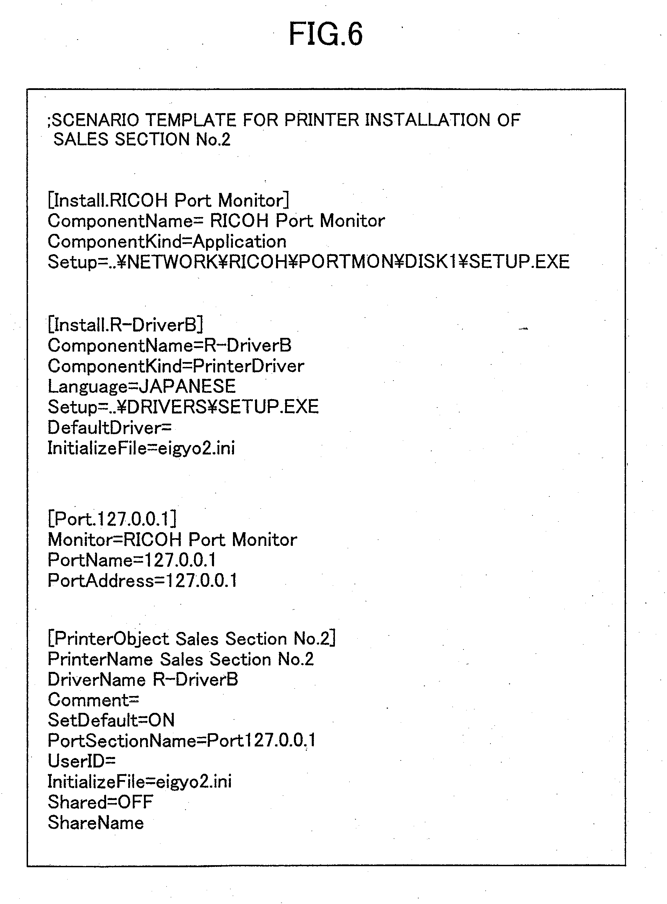

FIG. 5 and FIG. 6 are illustrations of examples of the scenario produced so as to install software into the host apparatus 1 in the network shown in FIG. 1. It should be noted that, conventionally, the network administrator produces the scenario for each host apparatus 1 such as shown in FIG. 5 or FIG. 6 by using a scenario producing tool, and distributes the produced scenario to each user. On the other hand, in the present embodiment, the scenario specific to each host apparatus 1 can be automatically produced in the host apparatus 1 by creating the template and the database as mentioned above.

The example shown in FIG. 5 is an example of the scenario for relating the host apparatuses 1-1, 1-2 and 1-3 provided in the network N1 to the printing device 3-1. The printing device 3-1 is given the printer name "Sales Section No.1", and the printer driver which drives the printing device 3-1 is "R-Driver A". Additionally, the network IP address of the printing device 3-1 is 127.0.0.1. Although the printer 3-1 is set to perform double-sided printing, this setup is set in "eigyo1.ini" which is an initialization file (@INI@) for the Sales Section No.1. The example shown in FIG. 6 is an example of the scenario for relating the host apparatuses 1-4, 1-5 and 1-6 provided in the network N1 to the printing device 3-2. The printing device 3-2 is given the printer name "Sales Section No.2", and the printer driver which drives the printing device 3-2 is "R-Driver B". Additionally, the network IP address of the printing device 3-2 is 127.0.1.1. Although the printer 3-2 is set not to perform double-sided printing, this setup is set in "eigyo2.ini" which is an initialization file (@INI@) for the Sales Section No.2.

Here, the user identification number @UID@ is also set as a parameter in the template 11. Although the user identification number is conventionally set separately after installation of a printer driver or software for printing, the user identification number in the present embodiment can be set simultaneously when installing the printer driver.

The user identification number (@UID@) is an identification number necessary for the network administrator to specify a user. That is, although persons other than the network administrator may change the host name or the log-in name, printing condition of each user can be grasped and a printing environment of each user can be set up by using the user identification number since the user identification number is information which the network administrator creates.

Moreover, the items set up by the initialization file (@INI@) are not only a setup regarding the above-mentioned double-sided printing and color output, and also setting items necessary for linking with other software when setting a printing operation can be described in the initialization file. Therefore, various print setting information items can be set up for each host apparatus by setting the initialization file as a parameter of the template of the scenario.

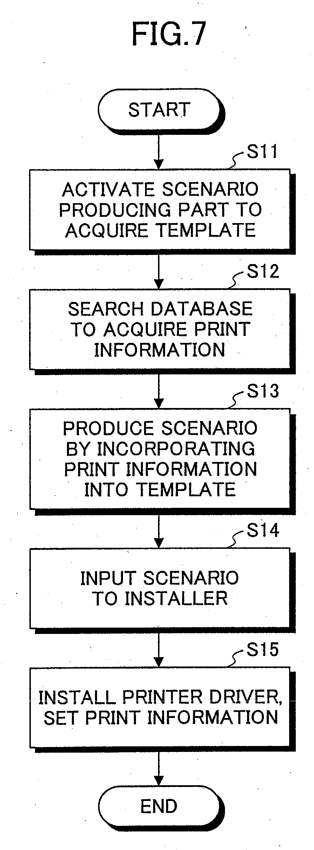

A description will now be given, with reference to FIG. 7, of a process for installing a printer driver and setting information necessary for printing into each host apparatus 1 by the in installer 13 using the above-mentioned scenario producing part 14. FIG. 7 is a flowchart of the process for installing a printer driver and setting information necessary for printing into each host apparatus 1.

First, the scenario producing part 14 is activated so as to execute the scenario producing program to acquire the template 11 for installation (step S11). Next, the scenario producing program searches the database 15 based on the host name of the host apparatus or the log-in name so as to acquire the print setting information assigned to the host name or the log-in name (step S12). Then, the scenario producing program produces the scenario 16 by incorporating the acquired print setting information into the template 11 (step S13). Thereby, the scenario 16 specific to each host apparatus 1 is produced. The scenario 16 is input to the installer 13 (step S14), and the printer driver is installed in the host apparatus 1 concerned based on the contents described in the scenario 16 and the print setting information is set up (step S15).

A description will now be given of a process of producing the scenario 16 from the template 11.

First, a process of acquiring print setting information based on the host name of the host apparatus 1 will be explained.

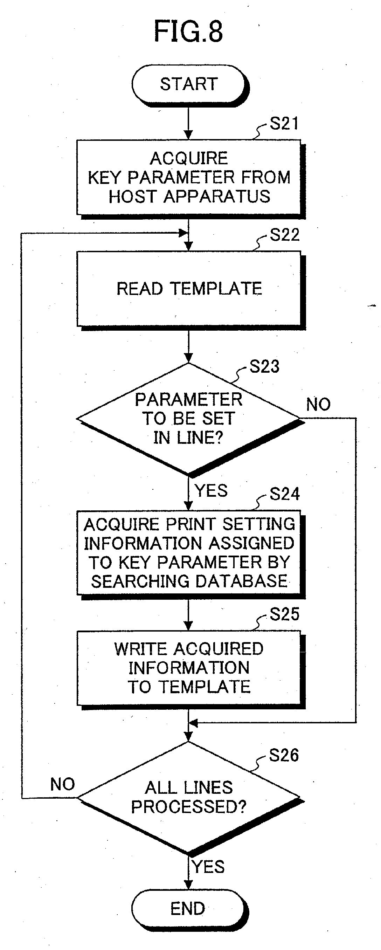

FIG. 8 is a flowchart of the process of acquiring print setting information based on the host name of the host apparatus 1. When the scenario producing part 14 is activated, the scenario producing program acquires the host name of the activated host apparatus 1 (step S21). The scenario producing program reads one line of the template (refer to FIG. 4) which is designated by, for example, a start argument (step S22), and, then, determines whether or not any parameters to be set up are described in the line (step S23). The parameters which should be set up are described in the form of environment variable such as "@DRIVERNAMER@" or "@ADDRESS@".

If there is described a parameter to be set up (step S23;Yes), the data corresponding to the parameter concerned is acquired from the print setting information assigned to a predetermined key parameter by referring to the database 15 given by the administrator (step S24). Here, in the preset embodiment, the above-mentioned key parameter is the host name of the host apparatus 1 or the log-in name of a user who currently logs in to the host apparatus.

The database 15 may be stored in a recording medium in which the installer 13 is stored, or may be stored in the server apparatus 2. When the database 15 is stored in the server apparatus 2, the server apparatus 2 is accessed through the network so as to acquire the print setting information from the server apparatus 2.

When there are no data (parameter) to be converted in the line of the template (step S23: No), the routine proceeds to step S26.

The database 15 stores information regarding a related table which contains the key parameter and the print setting information related to the key parameter. For example, the related table contains the relation to the IP address of the printing device 3 to which data is output. The scenario producing program acquires the print setting information related to each host apparatus 1 by searching the database 15.

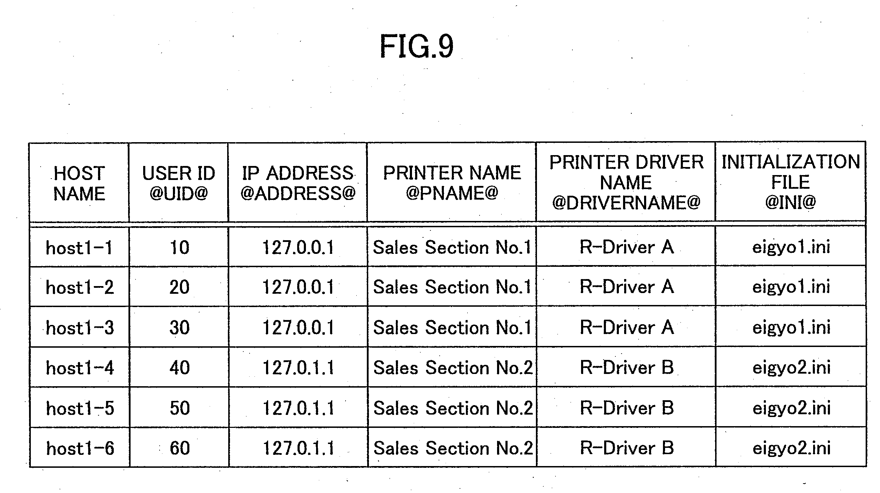

FIG. 9 is an illustration showing the contents of the database 15, which describes the host name as the key parameter and the print setting information related to the host name. As shown in FIG. 9, the values of the parameters are related to the host name, and are stored in the database. In this example, with respect to the host name "host1-1", the parameter (@DRIVERNAME@) corresponding to the name of the printer driver to be installed is set as "R-Driver A", and the parameter (@ADDRESS@) corresponding to the output IP address is set as "127.0.0.1". The kind of the database can be determined in accordance with the scale of a user environment and infrastructure such as use of commercially available SQL server or a table according to CSV file.

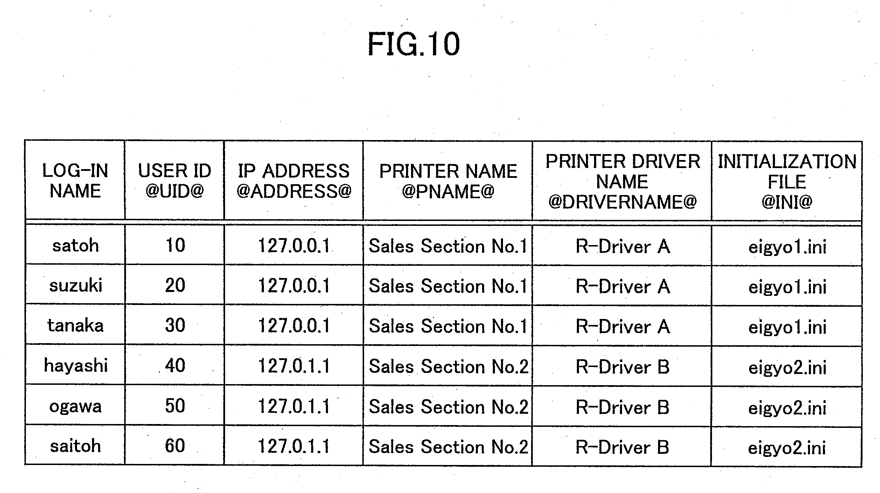

FIG. 10 is an illustration showing the contents of the database 15, which describes the log-in name as the key parameter and the print setting information related to the log-in name. In this example, with respect to the log-in name "hayashi", the parameter (@DRIVERNAME@) corresponding to the name of the printer driver to be installed is set as "R-Driver B", and the parameter (@ADDRESS@) corresponding to the output IP address is set as "127.0.1.1".

After acquiring the information from the database 15, the scenario producing program rewrites the parameters in the template 11 according to the acquired information (step S25). Then, it is determined whether or not the above-mentioned process is applied to all lines of the template (step S26). If there is an unprocessed line (step S26: No), the routine returns to step S22 so as to perform the same process as mentioned above. When the execution of the above-mentioned process to all lines of the template is completed (step S26: Yes), the routine is ended. In this state, the template 11 has been rewritten to the scenario 16, which is specific to the host apparatus 1.

Thereafter, the scenario 16 is input to the installer 13, and, as shown in FIG. 7, the installation of the printer driver to the host apparatus 1 and the setup of the print setting information are performed.

It should be noted that the installation program and the setting information acquisition program according to the software installation explained in the present embodiment may be stored in a processor readable recording medium such as a hard disk, a flexible disk, a CD-ROM, an MO or a DVD so that the programs are executed by being read from the recording medium by a computer. Alternatively, the programs may be stored in a transmission medium which can be distributed through a network such as the Internet.

The present invention is not limited to the specifically disclosed embodiments, and variations and modifications may be made without departing from the scope of the present invention.

## Claims

1. A software-installing method for installing software in a computer (1) so as to use one of a plurality of printing devices (3-1, 3-2) connected the computer through a network (N-1, N2),
**characterized by** the steps of:
acquiring a template (11) of a scenario (16) which describes procedures for installing the software;
acquiring data corresponding to parameters contained in the template with respect to said computer by searching an installation database (159; and
producing the scenario (16) which is specific to said computer by incorporating the acquired data into the parameters of said template (11).

2. The software-installing method as claimed in claim 1, further comprising a step of inputting the produced scenario to an installation program.

3. The software-installing method as claimed in claim 1 or 2, further comprising a step of acquiring the data corresponding to the parameters from the installation database located outside said computer.

4. The software-installing method as claimed in claim 2 or 3, further comprising a step of acquiring data regarding print setting information as data for said parameters from said installation database.

5. A software-installing method for installing software in a computer (1-1 to 1-6) so as to use one of a plurality of printing devices (3-1, 3-2) connected the computer through a network (N1, N2),
**characterized by** the steps of :
producing a template (11) of a scenario (16) which describes procedures for installing the software; and
producing the scenario (16), which is specific to said computer, based on the produced template (11).

6. A computer program comprising program code means that, when executed on a computer system, instruct the computer system to effect the method of any one of the proceeding claims.

7. A computer readable storage medium having stored thereon a program according to claim 6.
